# EUROPÄISCHE PATENTANMELDUNG

(11) **EP 2 811 177 A1**
(43) Veröffentlichungstag der Anmeldung: **10.12.2014**
(21) Anmeldenummer: 13170643.4
(22) Anmeldetag: 05.06.2013
(51) Int. Cl.: F16B 13/02, E04B 1/76, F16B 13/04, F16B 21/08

(54) **Befestigungselement**

(71) Anmelder: HILTI Aktiengesellschaft, 9494 Schaan (LI)
(72) Erfinder: Jiang, Tony, 9470 Buchs (CH); Meier, Robert, 6800 Feldkirch-Gisingen (AT)
(74) Vertreter: Hilti Aktiengesellschaft Corporate Intellectual Property

(57) **Zusammenfassung**

Bei einem Befestigungselement (10) für Dämmstoffe, insbesondere für Dämmstoffplatten, mit einem Schaft (12) und einem an einem ersten Ende des Schaftes (12) vorgesehenen Teller, wobei am, dem Teller entgegengesetzten zweiten Ende (18) des Schaftes (12) radial abstehende, sich in Längsrichtung (L) erstreckende Rippen (20) vorgesehen sind, nimmt die Dicke zumindest einer Rippe (20) in radialer Richtung (R) vom Schaft (12) weg zumindest abschnittsweise ab.

## Beschreibung

Die Erfindung betrifft ein Befestigungselement für Dämmstoffe, insbesondere für Dämmstoffplatten, nach dem Oberbegriff des Anspruchs 1.

Zur Befestigung von Dämmstoffen, beispielsweise von Dämmstoffplatten, werden Befestigungselemente verwendet, die einen länglichen Schaft sowie einen an einem ersten Ende vorgesehenen Teller aufweisen. Der Schaft wird durch den Dämmstoff gedrückt und in einer dahinter liegenden Wand befestigt, wobei der Teller verhindert, dass das Befestigungselement durch den Dämmstoff hindurchgedrückt wird. Um eine einfache Verankerung des Befestigungselements zu erzielen, sind am zweiten, dem Teller entgegengesetzt liegenden Ende des Schaftes radial abstehende, sich in Längsrichtung erstreckende Rippen vorgesehen. In der hinter dem Dämmstoff liegenden Wand ist eine Öffnung zur Aufnahme des zweiten, das heißt freien Endes des Schaftes vorgesehen. Der Durchmesser der Öffnung ist geringfügig kleiner als der Durchmesser des Schaftes im Bereich der Rippen. Beim Einschieben in die Öffnung werden die Rippen teilweise verformt oder umgebogen, wodurch das Befestigungselement in der Öffnung verklemmt und somit reibschlüssig gehalten ist. Die bisher bekannten Befestigungselemente können aber nur bei einer relativ genau hergestellten Öffnung verwendet werden, da die Rippen relativ steif sind. Bei zu kleinen Öffnungen ist dadurch eine sehr hohe Einschubkraft erforderlich. Ist der Durchmesser der Öffnung zu groß gewählt, reicht die Haltekraft des Befestigungselements nicht aus.

Aufgabe der Erfindung ist es, ein Befestigungselement für Dämmstoffe bereitzustellen, das flexibler verwendet werden kann und insbesondere eine bessere Anpassung an verschieden große Öffnungen ermöglicht.

Zur Lösung der Aufgabe ist ein Befestigungselement für Dämmstoffe, insbesondere für Dämmstoffplatten, vorgesehen, mit einem Schaft und einem an einem ersten Ende des Schaftes vorgesehenen Teller, wobei am, dem Teller entgegengesetzten zweiten Ende des Schaftes radial abstehende, sich in Längsrichtung erstreckende Rippen vorgesehen sind. Erfindungsgemäß nimmt die Dicke zumindest einer Rippe in radialer Richtung vom Schaft weg zumindest abschnittsweise ab. Die Rippen werden also vom Schaft ausgehend in radialer Richtung dünner, wodurch die Flexibilität der Rippen in radialer Richtung vom Schaft weg zunimmt. Dadurch sind die Rippen am freien Rand flexibler, sodass eine bessere Anpassung der Rippen und somit des Befestigungselements an verschieden große Öffnungen möglich ist. Da die Rippen nahe des Schaftes eine größere Dicke und somit eine geringere Flexibilität aufweisen, sind diese dennoch ausreichend stabil, um eine ausreichende Haltekraft bereitzustellen.

Die Rippen weisen beispielsweise jeweils einen ersten, an den Schaft angrenzenden Abschnitt auf, der eine im Wesentlichen konstante Dicke hat, sowie zumindest einen zweiten, radial außen liegenden Abschnitt, in dem die Dicke zumindest abschnittsweise abnimmt. Die in radialer Richtung innen liegenden ersten Abschnitte besitzen durch die gleichbleibende Dicke eine sehr hohe Festigkeit beziehungsweise eine geringe Biegsamkeit. Erst in einem radial äußeren, zweiten Abschnitt nimmt die Dicke ab, sodass diese Bereiche flexibler sind und sich besser an den Durchmesser einer Öffnung anpassen können.

Der zweite, außen liegende Abschnitt weist vorzugsweise eine radiale Länge auf, die maximal einem Drittel der gesamten radialen Länge der Rippe entspricht.

Der Querschnitt des zweiten, außenliegenden Abschnitts der Rippen kann beliebig angepasst werden, um eine gewünschte Flexibilität zu erzielen. Die Dicke des zweiten Abschnitts kann beispielsweise abschnittsweise stufenweise reduziert sein, sodass sich radial von innen nach außen mehrere Bereiche mit jeweils unterschiedlicher Dicke und somit unterschiedlicher Flexibilität ergeben.

Es ist aber auch denkbar, dass die Dicke des zweiten Abschnitts zumindest abschnittsweise in radialer Richtung nach außen kontinuierlich abnimmt, wodurch die Flexibilität der Rippen radial nach außen kontinuierlich zunimmt. Insbesondere kann die Dicke des zweiten Abschnitts konstant abnehmen.

Die zumindest eine Rippe kann einen insbesondere am zweiten Ende beginnenden, sich axial erstreckenden ersten Bereich aufweisen, in dem die Dicke der Rippe in radialer Richtung vom Schaft weg zumindest abschnittsweise abnimmt, sowie einen in axialer Richtung an den ersten Bereich anschließenden zweiten Bereich, in dem die Rippen eine konstante Dicke bis zum radial äußeren Rand haben. Das heißt, im ersten Bereich nimmt die Dicke in radialer Richtung vom Schaft weg ab, während der daran anschließende zweite Bereich im Querschnitt gewissermaßen einem herkömmlichen Befestigungselement entspricht. Die Rippen sind im in Einschubrichtung vorderen ersten Bereich flexibler, wodurch ein Einschieben des Befestigungselements in die Öffnung einfacher ist. Wird das Befestigungselement weiter in die Öffnung eingeschoben, gelangt auch der zweite Abschnitt in die Öffnung, der aufgrund der konstanten Dicke der Rippen steifer ist. Dadurch ist die Einschubkraft aber auch die Haltekraft des Befestigungselements größer. Der axiale Übergang zwischen dem ersten und dem zweiten Bereich kann stufenweise erfolgen. Das heißt, zwischen dem ersten und zweiten Bereich ist eine Stufe, über die die Dicke der Rippen von der reduzierten Dicke im ersten Bereich an die größere Dicke im zweiten Bereich angepasst wird. Es ist aber auch denkbar, dass der zweite, radial außen liegende Abschnitt des ersten Bereichs in Richtung zum zweiten Bereich hin eine langsam zunehmende Dicke aufweist oder ein Übergangsbereich zwischen beiden Bereichen vorgesehen ist, sodass der zweite Abschnitt des ersten Bereichs stufenlos in den zweiten Bereich, der in radialer Richtung eine konstante Dicke besitzt, übergeht.

Der Querschnitt der Rippen kann beliebig angepasst werden, um in radialer Richtung nach außen die Dicke der Rippen zu reduzieren. Die zumindest eine Rippe kann beispielsweise zwei entgegengesetzte Seitenflächen und eine radiale Stirnfläche aufweisen, wobei die zumindest eine Rippe eine durchgehend ebene Seitenfläche und eine entgegengesetzte, teilweise ebene Seitenfläche aufweist, die zur Stirnfläche hin eine Einbuchtung aufweist. Die Reduzierung der Dicke erfolgt in dieser Ausführungsform nur durch eine Einbuchtung auf einer, nämlich der zweiten Seitenfläche.

Es ist aber auch möglich, dass auf beiden Seitenflächen eine Einbuchtung vorhanden ist, wobei die Einbuchtungen in einem Querschnitt durch die Rippe spiegelsymmetrisch angeordnet sein können.

Ist nur auf jeweils einer Seitenfläche eine Einbuchtung vorhanden, können bei mehreren Rippen, die in radialer Richtung eine reduzierte Dicke aufweisen, die Einbuchtungen jeweils auf der gleichen Seitenfläche vorgesehen sein, sodass diese beim Einschieben des Befestigungselements in die Öffnung jeweils zur gleichen Seite wegkippen können.

Die ersten und zweiten Bereiche der Rippen können beispielsweise die gleiche Länge haben. Um eine mit zunehmender Einschubtiefe ansteigende Einschubkraft bzw. Haltekraft zu bewirken, können die Bereiche benachbarter Rippen aber auch eine voneinander abweichende Länge besitzen. Alle Rippen können beispielsweise in einem in Einschubrichtung vorderen Bereich eine reduzierte Dicke aufweisen, wobei die Länge dieser ersten Bereiche variiert. Zu Beginn des Einschiebevorgangs ist der Einschubwiderstand gering, sodass nur die ersten Bereiche des Schaftes mit in radialer Richtung abnehmender Dicke in die Öffnung ragen. Beim weiteren Einschieben steigt mit jedem zweiten Bereich, der in die Öffnung gelangt, die Einschubkraft, da die entsprechende Rippe aufgrund der konstanten Dicke im zweiten Bereich eine höhere Steifigkeit aufweist. Es ist beispielsweise denkbar, dass für die Länge der ersten Bereiche wechselweise zwei Längen vorgesehen sind, sodass die Einschubkräfte bzw. die Haltekräfte stufenweise zunehmen.

Um das Einschieben des Befestigungselements in die Dämmstoffmatten und die Öffnung erleichtern, ist vorzugsweise am dem Teller entgegengesetzten Ende des Schaftes eine Einführspitze vorgesehen, wobei insbesondere die Enden der Rippen ebenfalls angeschrägt sind.

Die Anzahl der Rippen, die in radialer Richtung einen reduzierten Durchmesser aufweisen, kann beliebig an die gewünschten Haltekräfte des Befestigungselements angepasst werden. Vorzugsweise weisen alle Rippen oder zumindest mehrere Rippen eine in radialer Richtung vom Schaft weg abnehmende Dicke auf.

Weitere Vorteile und Merkmale ergeben sich aus der nachfolgenden Beschreibung in Verbindung mit den beigefügten Zeichnungen. In diesen zeigen:
- Figur 1 eine perspektivische Ansicht eines Befestigungselements aus dem Stand der Technik,
- Figur 2 eine perspektivische Teilansicht eines erfindungsgemäßen Befestigungselements im Bereich von dessen Schaftspitze,
- Figur 3 eine Schnittansicht durch den Schaft des Befestigungselements aus Figur 2,
- Figur 4 eine perspektivische Detailansicht einer zweiten Ausführungsform eines erfindungsgemäßen Befestigungselements im Bereich von dessen Schaftspitze, und
- Figur 5 eine zweite perspektivische Ansicht des Befestigungselements aus Figur 4.

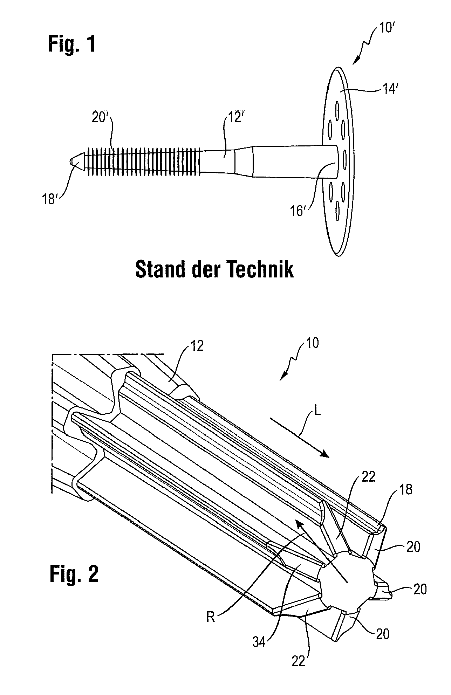

In Figur 1 ist ein Befestigungselement 10' für Dämmstoffplatten aus dem Stand der Technik gezeigt, das einen Schaft 12' sowie einen Teller 14' aufweist, der an einem ersten Ende 16' des Schaftes 12' vorgesehen ist. Am dem Teller 14' entgegengesetzten zweiten Ende 18' des Schaftes 12', das heißt der Schaftspitze, sind mehrere, in Umfangsrichtung umlaufende Rippen 20' vorgesehen.

Das Befestigungselement 10' wird zur Montage von Dämmstoffen an Wänden oder Decken verwendet. Dazu wird das zweite Ende 18' des Schaftes 12' durch den Dämmstoff gedrückt, bis der Teller 14' an der Oberfläche des Dämmstoffs aufliegt. Das aus dem Dämmstoff ragende zweite Ende 18' des Schaftes 12' wird in eine Öffnung in der Wand oder der Decke eingedrückt. Der Durchmesser der Öffnung ist kleiner als der Durchmesser des Schaftes im Bereich der Rippen 20'. Die Rippen 20' werden beim Einschieben des Befestigungselements 10' in die Öffnung verformt, wodurch das Befestigungselement 10' reibschlüssig in der Öffnung gehalten ist.

In Figur 2 ist eine Detailansicht einer ersten erfindungsgemäßen Ausführungsform eines Befestigungselements 10 dargestellt, die das zweite Ende 18 des Schaftes 12 zeigt. Der Aufbau des Befestigungselements 10 entspricht ansonsten im Wesentlichen dem in Figur 1 gezeigten Befestigungselement 10'. Das erfindungsgemäße Befestigungselement hat aber statt der in Umfangsrichtung umlaufenden Rippen 20' in Längsrichtung L des Schaftes 12 verlaufende, in radialer Richtung R abstehende Rippen 20.

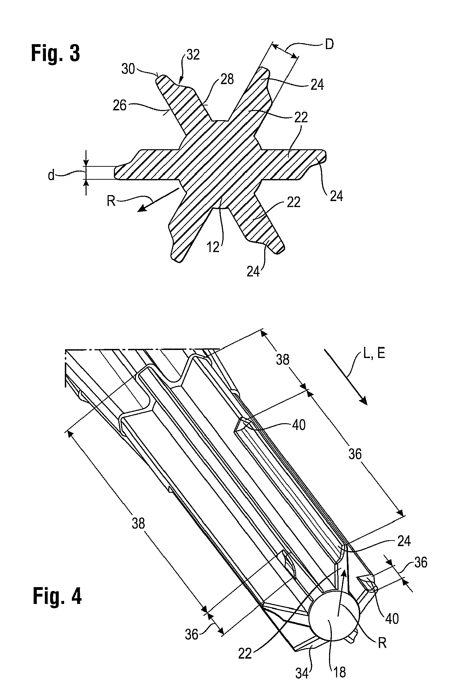

In dieser Ausführungsform sind die Rippen 20 sternförmig gleichmäßig über den Außenumfang des Schaftes 12 verteilt. In einem ersten, an den Schaft angrenzenden Abschnitt 22 weisen die Rippen 20 eine im Wesentlichen konstante Dicke D auf (siehe auch Figur 3). In einem zweiten, radial außen liegenden, an den ersten Abschnitt 22 angrenzenden Abschnitt 24 nimmt die Dicke in radialer Richtung vom Schaft 12 weg bis zum radialen, freien Rand ab.

Aufgrund der dort geringeren Dicke sind die zweiten, radial außen liegenden Abschnitte 24 wesentlich flexibler als die radial innen liegenden ersten Abschnitte 22, sodass sich erstere beim Einschieben in die Öffnung einfacher verformen können. Dadurch kann sich der Schaft 12 wesentlich besser an verschiedene Durchmesser einer Öffnung anpassen.

Wie in Figur 3 zu sehen ist, haben die Rippen 20 jeweils eine erste Seitenfläche 26 und eine zweite, entgegengesetzte Seitenfläche 28 sowie eine radial außen liegende Stirnfläche 30. In der hier gezeigten Ausführungsform ist die erste Seitenfläche 26 vollständig eben ausgebildet, während die zweite Seitenfläche 28 im zweiten Abschnitt 24 eine Einbuchtung 32 aufweist, durch die die Dicke der Rippe 20 im zweiten Abschnitt 24 reduziert wird.

Die Einbuchtung 32 ist so ausgebildet, dass die Dicke der Rippe 20 abschnittsweise kontinuierlich, in der hier gezeigten Ausführungsform konstant abnimmt, wobei die Rippe 20 nach der Reduzierung der Dicke auf das gewünschte Maß in radialer Richtung eine konstante Dicke d aufweist. Abhängig von der Form der Einbuchtung 32 ist es aber auch denkbar, dass die Dicke der Rippe 20 stufenweise reduziert wird oder konstant bis zum freien Rand abnimmt.

Es ist auch möglich, dass auf beiden Seitenflächen 26, 28 eine Einbuchtung 32 vorgesehen ist. diese Einbuchtungen können insbesondere im Querschnitt der Rippe 20 spiegelsymmetrisch angeordnet sein.

Wie in Figur 2 zu sehen ist, hat der Schaft 12 des Weiteren am zweiten Ende 18 eine Einführspitze, wobei diese durch eine Abschrägung 34 der Rippen 20 gebildet ist.

Statt der in den Figuren 1 bis 3 gezeigten Ausführungsform ist es auch denkbar, dass die Dicke der Rippe 20 vom Schaft 12 weg kontinuierlich oder konstant abnimmt, also gewissermaßen kein erster Abschnitt 22 mit einer konstanten Dicke vorgesehen ist.

Die Dicke der Rippe 20 kann kontinuierlich abnehmen, es ist aber auch möglich, dass diese stufenweise abnimmt, wobei auch mehrere Abschnitte mit jeweils konstanter, aber gegenüber der Dicke D reduzierter Dicke vorhanden sein können.

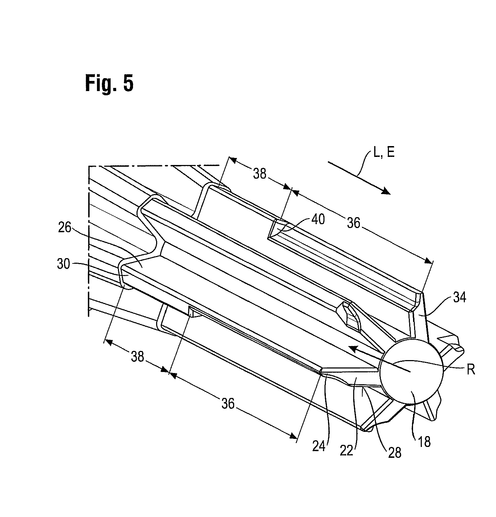

Eine zweite Ausführungsform eines erfindungsgemäßen Befestigungselements 10 ist in den Figuren 4 und 5 dargestellt. Die Rippen 20 sind hier in Längsrichtung L (Axialrichtung) jeweils in zwei Bereiche 36, 38 unterteilt, wobei die Rippen 20 jeweils unterschiedliche Längen der ersten, am zweiten Ende 18 beginnenden Bereiche 36 sowie die an die ersten Bereiche 36 axial anschließenden zweiten Bereiche 38 aufweisen. Die addierte Länge der ersten Bereiche 36 und der zweiten Bereiche 38 einer Rippe 20 sind jeweils gleich groß.

Wie in Figur 4 zu sehen ist, weisen die Rippen 20 im ersten Bereich 36 jeweils einen ersten, radial inneren Abschnitt 22 mit konstanter Dicke sowie einen radial außen liegenden, zweiten Abschnitt 24 mit in radialer Richtung vom Schaft weg abnehmender Dicke auf. Im in Längsrichtung L, also in Einschubrichtung E dahinter liegenden zweiten Bereich 38 haben die Rippen 20 jeweils eine in radialer Richtung konstante Dicke.

In den ersten Bereichen 36 sind die Rippen 20 durch die radial nach außen abnehmende Dicke flexibler ausgebildet, während die Rippen 20 in den dahinter liegenden zweiten Bereichen 38 durch die in radialer Richtung konstante Dicke eine höhere Steifigkeit aufweisen.

Zu Beginn des Einschiebevorgangs befinden sich nur die ersten Bereiche 36 in der Öffnung. Da die ersten Bereiche 36 aufgrund der in radialer Richtung nach außen reduzierten Dicke der Rippen 20 flexibler sind, verformen sich diese leichter, sodass das Befestigungselement mit relativ geringem Widerstand in die Öffnung geschoben werden kann. Gelangen beim weiteren Einschieben des Befestigungselements 10 die zweiten Bereiche 38 in die Öffnung, wird der Einschiebewiderstand größer, da die zweiten Bereiche 38 aufgrund der konstanten Dicke weniger flexibel sind.

Da die Länge der ersten Bereiche 36 variiert, nimmt die Haltekraft beziehungsweise der Einschiebewiderstand des Befestigungselements 10 stufenweise zu, wobei durch das Einschieben jedes zweiten Bereichs 38 in die Öffnung eine Erhöhung der Haltekraft und der benötigten Einschubkraft erfolgt.

Wie in den Figuren 4 und 5 zu sehen ist, ist zwischen den zweiten Abschnitten 24 der ersten Bereiche 36 und den zweiten Bereichen 38 eine Stufe 40 gebildet. Statt dieser Stufe 40 ist es auch denkbar, dass der zweite Abschnitt 24 kontinuierlich in den zweiten Bereich 38 übergeht, also die reduzierte Dicke des ersten Bereichs 36 entgegen der Einschubrichtung E abnimmt, wodurch ein stufenloser Übergang zwischen erstem Bereich 36 und zweitem Bereich 38 erfolgt.

Bei den gezeigten Ausführungsformen sind die radialen Längen der Rippen gleich, auch über ihre axiale Erstreckung hinweg.

Es ist aber denkbar, dass einige Rippen eine geringere radiale Länge als andere Rippen haben und/oder dass die radiale Länge einiger oder aller Rippen über ihre Axialerstreckung unterschiedlich ist, zum Beispiel zum Teller 14 hin zunimmt.

Auch beliebige Kombinationen hiervon sind möglich.

## Patentansprüche

1. Befestigungselement (10) für Dämmstoffe, insbesondere für Dämmstoffplatten, mit einem Schaft (12) und einem an einem ersten Ende (16) des Schaftes (12) vorgesehenen Teller (14), wobei am, dem Teller (14) entgegengesetzten zweiten Ende (18) des Schaftes (12) radial abstehende, sich in Längsrichtung (L) erstreckende Rippen (20) vorgesehen sind, **dadurch gekennzeichnet, dass** die Dicke zumindest einer Rippe (20) in radialer Richtung (R) vom Schaft (12) weg zumindest abschnittsweise abnimmt.

2. Befestigungselement nach Anspruch 1, **dadurch gekennzeichnet, dass** die Rippen (20) jeweils einen ersten, an den Schaft (12) angrenzenden Abschnitt (22) aufweisen, der eine im Wesentlichen konstante Dicke (D) hat, sowie zumindest einen zweiten, radial außen liegenden Abschnitt (24), in dem die Dicke zumindest abschnittsweise abnimmt.

3. Befestigungselement nach Anspruch 1 oder 2, **dadurch gekennzeichnet, dass** der zweite Abschnitt (24) eine radiale Länge hat, die maximal einem Drittel der gesamten Länge der Rippe (20) entspricht.

4. Befestigungselement nach einem der vorhergehenden Ansprüche, **dadurch gekennzeichnet, dass** die Dicke des zweiten Abschnitts (24) zumindest abschnittsweise stufenweise reduziert ist und in radialer Richtung (R) nach außen abnimmt, vorzugsweise konstant.

5. Befestigungselement nach einem der vorhergehenden Ansprüche, **dadurch gekennzeichnet, dass** die Dicke des zweiten Abschnitts (24) zumindest abschnittsweise in radialer Richtung (R) nach außen konstant abnimmt.

6. Befestigungselement nach einem der vorhergehenden Ansprüche, **dadurch gekennzeichnet, dass** zumindest eine der Rippen (20) einen insbesondere am zweiten Ende (18) beginnenden, sich axial erstreckenden ersten Bereich (36) aufweist, in dem die Dicke der Rippe (20) in radialer Richtung vom Schaft (12) weg zumindest abschnittsweise abnimmt, sowie einen in axialer Richtung an den ersten Bereich (36) anschließenden zweiten Bereich (38), in dem die Rippen (20) eine konstante Dicke bis zum radial äußeren Rand aufweisen.

7. Befestigungselement nach Anspruch 6, **dadurch gekennzeichnet, dass** die ersten Bereiche (36) benachbarter Rippen (20) eine voneinander abweichende Länge aufweisen.

8. Befestigungselement nach einem der vorhergehenden Ansprüche, **dadurch gekennzeichnet, dass** die zumindest eine Rippe zwei entgegengesetzte Seitenflächen (26, 28) und eine radiale Stirnfläche (30) hat, wobei die zumindest eine Rippe (20) eine durchgehend ebene Seitenfläche (26) und eine entgegengesetzte, teilweise ebene Seitenfläche (28) aufweist, die zur Stirnfläche (30) hin eine Einbuchtung (32) aufweist.

9. Befestigungselement nach einem der vorhergehenden Ansprüche, **dadurch gekennzeichnet, dass** am, dem Teller (14) entgegengesetzten zweiten Ende (18) des Schaftes (12) eine Einführspitze vorgesehen ist, wobei insbesondere die Enden der Rippen (20) angeschrägt sind.

10. Befestigungselement nach einem der vorhergehenden Ansprüche, **dadurch gekennzeichnet, dass** alle oder mehrere Rippen (20) eine abnehmende Dicke in radialer Richtung vom Schaft (12) weg aufweisen.
